# EUROPEAN PATENT SPECIFICATION

(11) **EP 1 360 121 B1**
(45) Date of publication and mention of the grant of the patent: **18.01.2006**
(21) Application number: 01931449.1
(22) Date of filing: 03.05.2001
(51) Int. Cl.: B65D 63/10, F16B 2/20, F16G 11/00, F16L 3/23, H02G 3/30

(54) **A FITTING FOR THE USE AS A MEANS FOR THE GRIPPING OF ONE OR MORE OBJECTS**
WERKZEUG ZUR VERWENDUNG ALS MITTEL ZUM GREIFEN EINES ODER MEHRERER OBJEKTE
FIXATION COMME DISPOSITIF D'ACCROCHAGE D'UN OU DE PLUSIEURS OBJETS

(30) Priority: 03.05.2000 DK 200000730
(43) Date of publication of application: 12.11.2003
(73) Proprietor: Shore, Jeffrey Pascal, 2100 Copenhagen O (DK)
(72) Inventor: Shore, Jeffrey Pascal, 2100 Copenhagen O (DK)
(86) International application number: PCT/DK2001/000305
(87) International publication number: WO 2001/083315

(56) References cited:
- WO-A-96/00175
- DK-U- 9 400 170
- GB-A- 2 297 577
- GB-A- 2 309 257
- SE-C- 221 283

## Description

The present invention relates to a fitting for the use as a means for the gripping of one or more objects, and in particular to a fitting having the natural shape of a substantially helical coil with at least two windings formed by a wound member of a resilient material with shape memory.

It is often desirable or even necessary to confine, constrict, bundle or secure elongated objects, such as rods, wires, cables, cords or the like. If the elongated objects are flexible, as are electrical cables or cords it is often also desirable to attach these to a rigid member, eg. for support. Further it may be desirable to protect such elongated objects or bundles thereof mechanically, ie. against external influences such as impacts, squashing, or the like.

In this respect it has been suggested to use coils of elastic material.

WO-A1-96/00175 discloses various embodiments spiral and helical coils of elastic material. Common to both the spiral and helical coils is that they are tightly wound and difficult to mount. In order to be able to arrange them around a bundle their one end has to be secured against the bundle of elongated objects, eg. by means of an anchor, while the other is then stretched to its fullest. In order to allow this, the coils have been provided with a pullstalk. This results in a protruding anchor and pullstalk which leads to problems of entanglement. The pullstalk could inadvertently entangle other objects. This entanglement might also cause the coil to become unhooked, thereby falling off and releasing the bundled items. It may also inadvertently cause damage to the bundle or third objects. In one embodiment the pullstalk is replaced by a helical coil which may be used to secure the bundle of elongated objects to a third object. This coil as well as the pullstalk would also suffer from the risk of getting entangled not only in different objects but also in the objects of the bundle itself.

Another problem with an invention of this nature is, that the user has to substantially stretch the bundling device while attempting to keep one end in place. This typically results in requiring two hands to affix the coil, even if the end is provided with an anchor.

The use of a tightly wound, highly flexible coil necessitating the use of a pullstalk results in a device which is not only complicated to manufacture but also to use. Moreover, the presence of the pullstalk results in a device having a standing and a working end, thus limiting the ease of use.

Another embodiment of a helical coil is disclosed in DK-U3-9400170. In this document it is suggested to use a very long helical coil in order to give the elongated objects an overall uniform appearance. That is to say, when mounted the helical coil encapsulates the elongated objects over their entire length in order to make them appear as one single thicker elongated object. Though there is some bundling of the elongated objects in the very long helical coil it is not the intention to tightly bundle the objects together. Accordingly they are largely free to slide axially within the coil which acts like a sheathe. To prevent the coil from slipping clamping means are formed at the extremities of the coil. These clamping means clamp the bundle and thus prevent the coil from sliding along the bundle. Furthermore the material is foreseen to be used has plastic properties thus limiting the ability of the coil to be reused.

Because it is the intention to cover longer lengths of cables, the helical coil of DK-U3-9400170 constitutes a very long coil with numerous windings. This results in a cumbersome application and removal process, requiring either numerous revolutions of the fitting or perhaps the removal of the plugs in order to displace one or more of the cable axially from the coil and refitting the plugs thereafter.

From SE-C1-221283 there is known a helical coil for marking individual elongated objects, in particular electrical cords. The coil is made from a flat band of relatively rigid material, which is bendable but not stretchable.

Apart from bundling neither being intended nor suggested in SE-C1-221283, this lack of flexibility would limit the use of the invention for the purpose of bundling and holding elongated objects. Also, because of the rigidity of the material the wrapping may cause damage to the elongated object, in particular to the insulation of electrical cords if overtightened. Document GB-A-2 297 577, upon which the preamble of claim 1 is based, discloses a helical elongate strip for winding along cables.

It is the object of the invention to provide an improved helical coil fitting which is easier to mount and more convenient to handle than the prior art ones.

In particular it is the object of the invention to provide fitting which may be mounted with one hand only.

According to the invention this object is, in a fitting according to the opening paragraph, achieved by the features of claim 1.

Said spacing relationship ensures that the gap necessary to allow easy passage of the elongated objects between the adjacent windings can be obtained without excessive force having to be applied. Moreover, a gap of these dimensions is still small enough to provide a fitting, which through its compact shape avoids entanglement when applied to a bundle of elongated objects.

In a further preferred embodiment the largest cross-sectional dimension is approximately between 6 mm and 16 mm, preferably between 8 mm and 14 mm, and most preferably between 10 mm and 12 mm.

These dimensions have been found to facilitate manipulation. With these dimensions it is very easy to manipulate the coil windings as they allow the thumb or the index finger of the manipulating hand to penetrate sufficiently into the existing gap between adjacent windings so as to open the gap sufficiently for the bundle of elongated objects to pass between the adjacent windings. In particular, with these dimensions the mounting can be done using only the thumb or the index finger, respectively. This allows for single-handed application, hence facilitates the ease of use.

A fitting of smaller dimensions is not only less convenient from a manipulation viewpoint, but could render the fitting hazardous from a child safety point of view.

Moreover, these dimensions allow for the fitting to be used as a protective means, by encircling exposed objects with a buffer of flexible material.

Finally these comparatively large dimensions have the further advantage that they increase the weight of the fitting. This increased weight is advantageous because it aids in stretching a substantially vertically hanging bundle of flexible elongated objects as well as ensuring that the bundle hangs straight. Both of which may be desirable from an aesthetic point of view. As a further advantage the increased weight also limits movement of bundles lying horizontally on a surface.

Due to the shape memory of the fitting and the self-contracting thereof, the fitting will be able to fit any form and size of object.

In a further preferred embodiment the number of windings is from 2 to 10.

This has been found to be sufficient to ensure good gripping and positioning around the elongated objects to be bundled, without jeopardising the ease of mounting. In particular it allows for the fitting once applied, through its combined use of compression and friction to stay in position of its own accord and not slide along the bundle.

In a particularly preferred embodiment the number of windings is not an integer.

This further enhances the convenience of the mounting of the fitting around the elongated objects. This is in particular the case if the number of windings N+½, where N is an integer for which 1 < N < 10. Having N+½ windings allows the last half winding to be easily pressed under the bundle by the use of the thumb when mounting the fitting. The last half winding then snaps into place under the bundle, upon which the fitting is in place. Due to the half winding the mounting of the fitting can be effected without having to turn the bundle of elongated objects with respect to the manipulating hand or vice versa.

Moreover the use of the half winding results in an uneven weight distribution. The risk of the fitting rolling is thus reduced, which may be very convenient if it has to be placed temporarily on a surface, such as a tabletop or a floor, during, or rather before, mounting.

In the most preferred embodiment the number of windings is approximately 3½. This ensures sufficient gripping whilst at the same time requiring only limited manipulation in order to mount the fitting.

In order to further facilitate the snapping when applying fitting, the wound member comprises in a further embodiment extremities with reduced cross-sectional area. Moreover the reduced cross section greatly facilitates the removal of the fitting from a bundle of elongated objects, by allowing at least one of the gripping fingers to enter between the fitting itself and the bundle on which it is tightly mounted.

If, as provided according to another preferred embodiment the cross section of elongated member is substantially circular, it is preferred that at least one of the extremities is hemispherical.

However, according to yet another embodiment the cross-section of the wound member is substantially square or rectangular with rounded edges.

This facilitates the placement of text on the exterior of the helical coil, and increases the friction on the interior of the helical coil.

In a different embodiment the cross-section of the wound member is substantially oval or elliptic allowing for placement of text almost inside the gap.

In a further preferred embodiment the wound member is provided with a gripping surface in the vicinity of at least one extremity, said gripping surface being adapted for further enhancing digital gripping during manipulation.

This is in particular important when removing the fitting from the bundle, because unlike the mounting process it is not in the removing process sufficient to simply increase the gap between adjacent windings to start the process. Rather, the easiest way of starting the removing process is to lift one of the ends to shift it across the bundle. By successively pressing the rest of the coil under the bundle the fitting may conveniently be removed, with a single hand. In a similar manner it is possible to extract only one single elongated object from the bundle of objects. In this case, however, it should be ensured that the free end engages the bundle again.

In a variant of the fitting it comprises at least one further helical coil in which the windings are turned the opposite way.

This has the advantage that larger gaps are provided in which the mounting process may advantageously start. Moreover, depending on the layout it may have the further advantage that it allows for several bundles of elongated objects to be arranged in parallel. It further has the advantage that it may also, if the further coil is not coaxial with the first coil, but coils about a separate parallel axis, allow for independent attachment of different separate bundles of elongated objects at the same time.

In a further embodiment of the fitting the outer surface is flattened perpendicular or parallel to the bundle, to improve the grip of the fitting and to allow a more clearly visible surface for the application of text, or other printing, for the use of advertising etc.

According to yet another preferred embodiment of the fitting the material is natural or synthetic rubber, a silicone based product or plastic.

These materials have the advantage of possessing compressible qualities, which renders the fitting easily manipulable and at the same time eliminates any risk of damage to the bundled elongated objects.

Further, according to a different aspect of the invention this allows for the use of the fitting as a means of protection by encircling an object which is exposed to knocks or scratching.

Finally according to another aspect of the invention the fitting may be used as a relaxing means to relieve personal stress by handling, squeezing, twisting, turning or other manipulation.

For a better understanding of the invention a detailed description of non-limiting embodiments will now be given based on the accompanying drawings on which:
Fig. 1 shows an example of a first embodiment of the invention comprising a helical coil with rounded extremities,
Fig. 2 shows an example of the first embodiment as it looks when being applied to a bundle of elongated objects,
Fig. 3 shows an example of the first embodiment as it looks when applied and gripping a bundle elongated objects,
Fig. 4 shows a variant of the first embodiment having grooves at the extremities to facilitate firmer grip during manipulation,
Fig. 5 shows the first embodiment used as a protective means by applying it to e.g. a table leg,
Fig. 6 shows a second embodiment of the invention comprising further helical coils in which the windings are turned the opposite way,
Fig. 7 shows a third embodiment of the invention where the primary coil and the further helical coils in which the windings are turned the opposite way are coaxial,
Fig. 8 shows an example of the first embodiment applied to a deformed (bent) bundle of elongated objects,
Fig. 9 show an example of a fourth embodiment which is not part of the invention claimed, consisting of a flexible binding coil in the shape of a flattened helical spiral, perpendicular to the bundle, applied with text, and
Fig. 10 and 11 show the fitting in use as a shortening means.

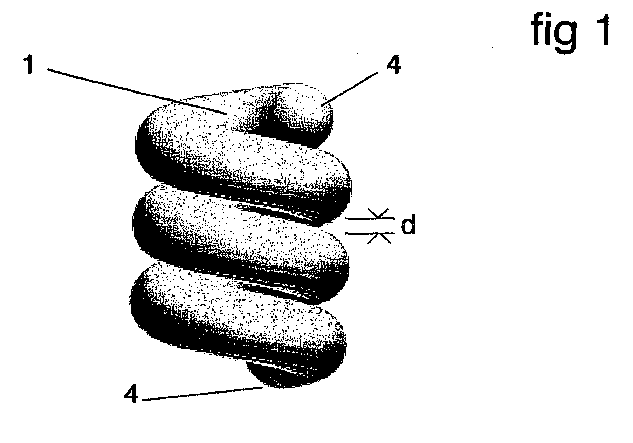

In fig. 1 there is shown a first embodiment of a fitting according to the invention. The fitting is shown as it appears if no external forces influence it, ie. in its natural or inherent shape.

The fitting is made from an elastic material, preferably natural or synthetic rubber, a silicone based product or plastic. In the preferred embodiment EDPM rubber having a Shore A hardness in the interval from approximately 50 to approximately 80, preferably approximately 70, is used. The use of such material allows the fitting to be elastically deformed during mounting or removal and ensures good friction and gripping force on the bundle of elongated objects 5 to be held together without the risk of damage to them. Preferably, the coil is moulded as one single unitary object, ie. without inlays or reinforcings or the like.

In the first embodiment, as shown, the fitting comprises a helical coil formed from a wound member 1. The number of windings is preferably 2 to 10. The lower limit being set by the fact that the fitting has to grab the bundle of elongated objects 5 properly, whereas the upper limit is set by the fact that too many windings renders mounting cumbersome.

Moreover this number of windings allows for the easy removal of a single object from the bundle of elongated objects.

As can be seen from fig. 1 the fitting comprises a non-integer number of windings. In the currently preferred embodiment of the fitting this non-integer is 3½. The use of a half-winding, facilitates the mounting of the fitting on the bundle, as will be explained later:

In order to further facilitate mounting the dimensions of the fitting are adapted to suit single-handed manipulation. For the preferred 3½ winding embodiment the wound member 1 has a circular cross section with a diameter 11 mm. However, different dimensions are also possible, eg. approximately between 6 mm and 16 mm, preferably between 8 mm and 14 mm, and most preferably between 10 mm and 12 mm. The size of the central axial aperture of the coil in the natural position preferably corresponds to the dimension of the wound member, but may of course be chosen to be both smaller and bigger to suit specific purposes. Larger or smaller dimensions would be considered inconvenient for manipulation. Moreover, with smaller dimensions the fitting could become hazardous from a child safety point of view, as they might get stuck in the throat of a small child with the risk of the child choking. These comparatively large dimensions have the further advantage that they increase the weight of the fitting. This increased weight is advantageous because it aids in stretching a substantially vertically hanging bundle of flexible elongated objects as well as ensuring that the bundle indeed hangs straight. Both of which may be desirable from an aesthetic and practical point of view. For the preferred 3½ winding rubber fitting with 11 mm diameter circular cross section of the wound member 1 and a similar diameter of the central aperture this results in a fitting weighing approximately 35 g.

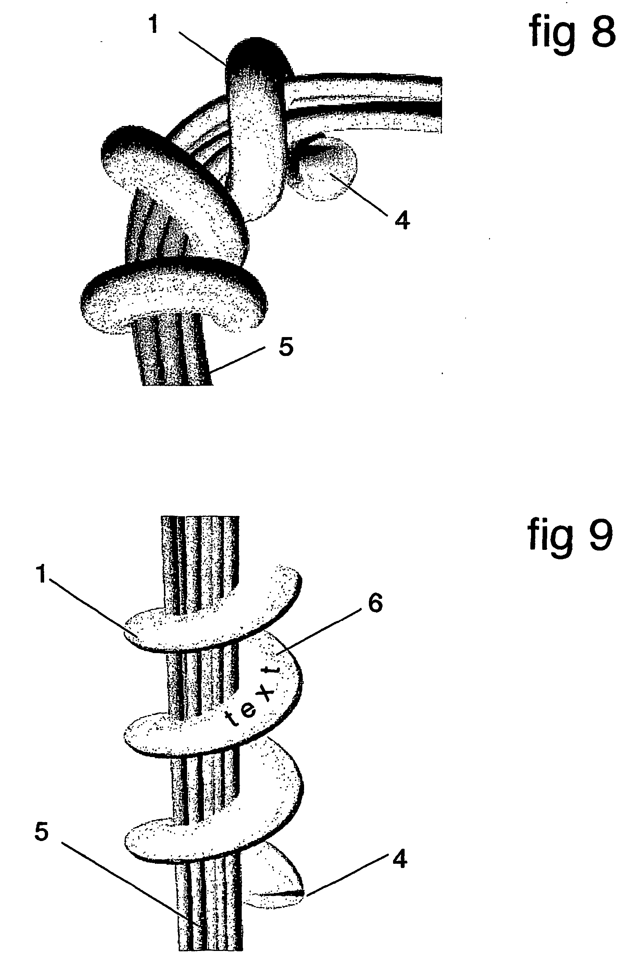

For other embodiments with non-circular cross sections of the wound member 1 these dimensions would relate to the largest dimension of the cross section. Such non-circular cross sections could involve substantially square or rectangular cross sections, preferably with rounded edges or substantially oval or elliptic cross sections, as shown in fig. 9. Moreover outer surface of the overall coil could be flattened perpendicular or parallel to the bundle, to improve the grip of the fitting and to allow a more clearly visible surface for the application of text, or other printing, for the use of advertising etc.

When the fitting is in its natural shape there is provided a gap d between adjacent windings. This further facilitates the mounting of the fitting, as it allows a finger of the manipulating hand to easily enter deep enough into the gap d to allow the application of force in a direction substantially along the longitudinal axis of the helical coil. Accordingly it is easy to open up the gap between adjacent windings sufficiently to allow the bundle of elongated objects 5 to pass between them. It is important to be able to open a sufficient gap between the adjacent windings, as the surface of the wound member 1 has high friction which prevents the mounted fitting from sliding along the bundle of elongated objects 5. The size of the gap d depends partially on the cross section of the elongated element, but is preferably 1/5 of the largest dimension of the cross section of the wound member 1.

With the above preferred dimension the fitting of fig. 1 becomes very easy to mount. The mounting is effected by placing the fitting in the palm of a hand and closing four fingers around it. The thumb may now be moved down entering sideways into the gap between the first and second winding. Upwards movement of the thumb will then open up the gap to some 15 mm, which even when considering the high friction is sufficient to allow a bundle of elongated objects 5 to be pressed through. Using the remaining four fingers the fitting may then successively be wrapped around the bundle of elongated objects 5. During this process it is the bundle of elongated objects 5 in conjunction with the fingers which open up the gap sufficiently to be applied. At the end of the process one last half turn remains, which by itself conveniently snaps into position below the bundle of elongated objects 5.

The convenience of this process is further enhanced by the rounded profile which produces a fitting that has a propensity to position itself automatically around the bundle of elongated objects 5. When either one of the ends of the fitting is held in contact with the elongated objects 5, the remaining part is easily guided into position with a rotating motion that requires only a single hand following the direction of the helical coil as explained.

In particular the convenience of this process is improved if the wound member 1 comprises extremities 4 with reduced cross-sectional area, if the cross section of elongated member 1 is substantially circular it is advantageous if at least one of the extremities 4 is hemispherical, as can be seen in any one of figs. 1-4.

As mentioned earlier the coil 1 is made of an elastic material providing it with a shape memory. Accordingly, when not fitted, the fitting recoils around an imaginary axis into a helical coil. This is caused by the geometrical structure, whereby the face of the coil, which is nearest to an imaginary axis, is shorter than the face furthest from this imaginary axis. This phenomenon also encourages the fitting to automatically position itself correctly around the bundle of elongated objects 5. It also allows, through its inherent resistance to stretching (elastic shape memory), for the bundle and the enveloping fitting to be held in position through the compression force that the fitting exerts on the bundle of elongated objects 5. The helical shape allows for firm and uniform pressure to be exerted on the bundled objects 5 along the full length of the fitting.

The elasticity of the fitting allows for the fitting to expand and contract to firmly hold together and accommodate of its own accord different bundle thicknesses and different quantities of elongated objects 5. This also serves to eliminate slack in a bundle of elongated objects 5 caused by movement thereof and allows the fitting to stay in position of its own accord on the bundle. However, when released from use the fitting is sufficiently elastic to substantially return to its original compact shape, allowing for tangle-free storage and easy re-application.

The elasticity is provided by making the whole fitting from a resilient flexible material, such as a rubber compound, silicone, or plastic. As mentioned above EDPM rubber having a Shore A hardness in the interval from approximately 50 to approximately 80, in particular approximately 70, is preferred. This material is formed by moulding, in particular injection moulding, or by the less expensive method of extrusion. Through these processes the material can be given rounded or otherwise shaped endings and the characteristic helical coil shape. Should extrusion be used, the ends can be shaped subsequent to extrusion by pressure before or after the curing of the material.

If it is desired to reposition the fitting, this can be effected without removing the fitting by simply loosening and sliding the fitting in the desired direction along the bundle of elongated objects 5. This can be achieved with a single handed operation by applying counter pressure to the two ends of the helical coil in such a way, as to twist the coil ends in opposite directions, resulting in an increase of the overall diameter of the helical coil. When subsequently left to itself in the desired position the fitting will regain its firm grip.

It should be mentioned that the elongated objects 5 which are to be bundled need not be of the same nature. In particular the fitting allows for easy and convenient attachment of elongated objects 5 such as electrical cords to other more rigid or solid objects 7, such as table legs, pipes, or rings etc.

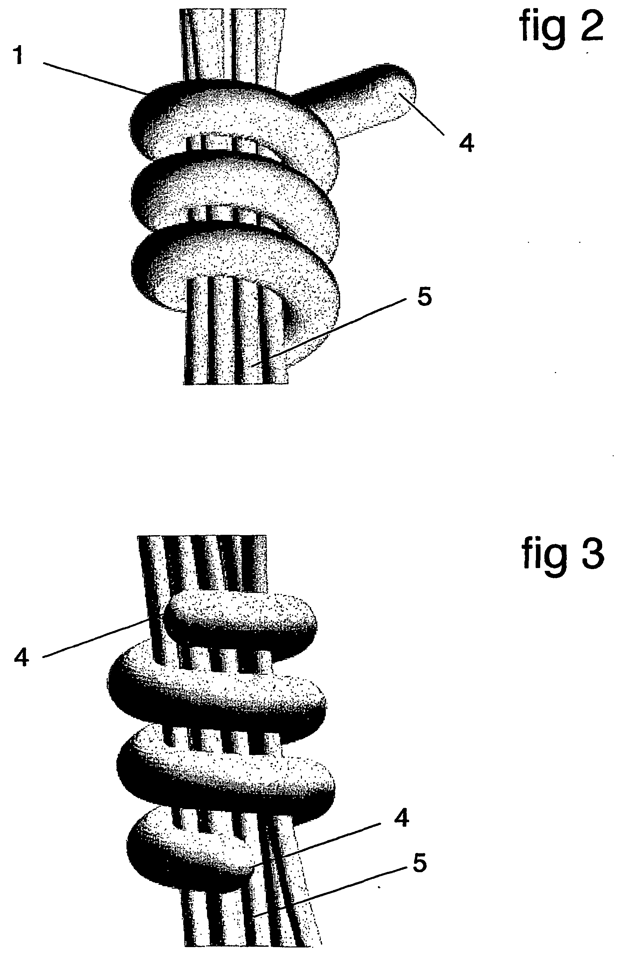

Fig. 2 shows the fitting in an imaginary position during mounting or removal. It should be noted that this imaginary position does not necessarily correspond to a position occurring during the mounting process described earlier.

Fig. 3 shows the fitting in the mounted position around a rather thick bundle of elongated objects 5, such as electrical cords. It will be seen that the diameter of the helical coil is in this case increased with regard to the natural shape of fig. 1. Accordingly the fitting exerts a compressive force on the bundle thereby holding it firmly together.

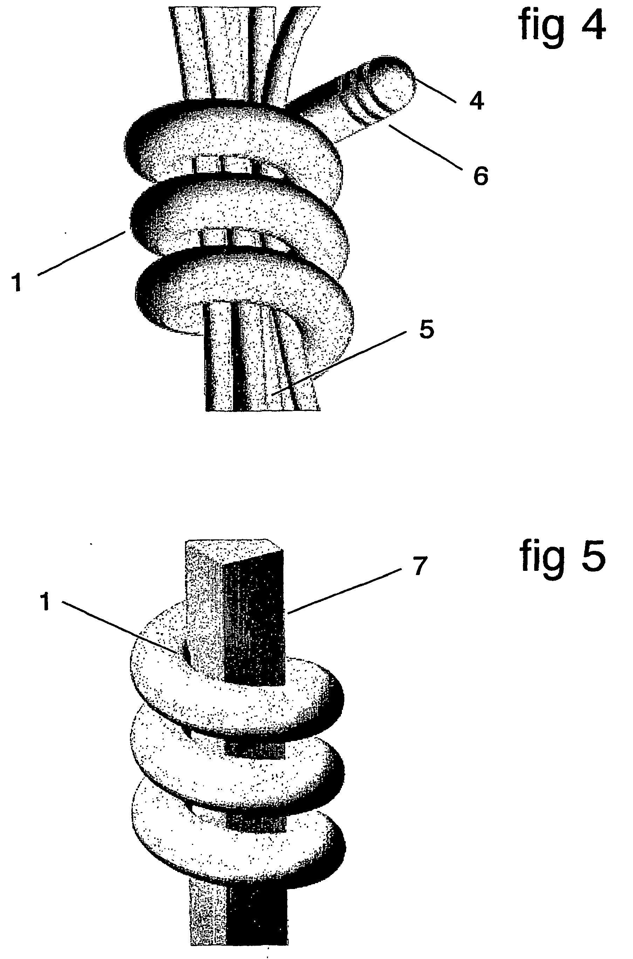

Fig. 4 shows a variant of the helical coil in an imaginary position during mounting or removal corresponding to that of fig. 2. Accordingly, this imaginary position does also not necessarily correspond to a position occurring during the mounting process described earlier.

This variant of the helical coil has circumferential groves 6 in the vicinity of one extremity 4. These circumferential grooves provide a gripping surface which is particularly useful when removing the fitting, because it improves the digital gripping, eg. by the thumb and the index finger, when removing the fitting.

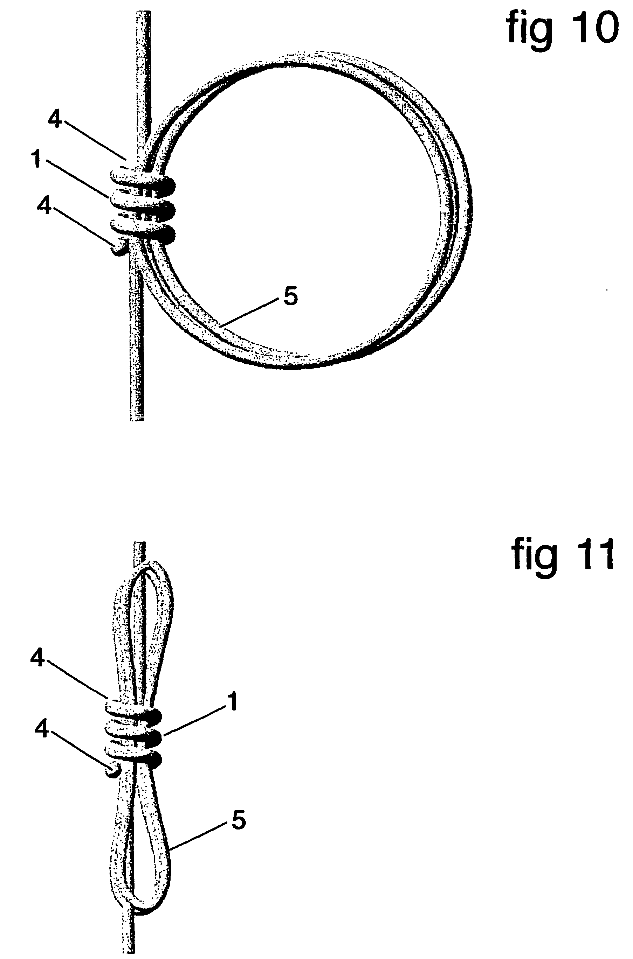

From figs. 10 and 11 it can be seen that the fitting can not only be used to bundle several elongated distinct objects but also to bundle one single object, where the single object passes the central axial aperture of the fitting several times. The single elongated object thus virtually appearing as several elongated objects, from the bundling, gripping and holding viewpoint.

It should of course be understood that in addition to the single object of figs. 10 and 11, other elongated objects may be part of the bundle. The loop could thus serve to match the length the looped elongated object has to the length of these other objects.

The fitting may thus not only be used to bundle objects but also to shorten one or more objects that may form part of the bundle.

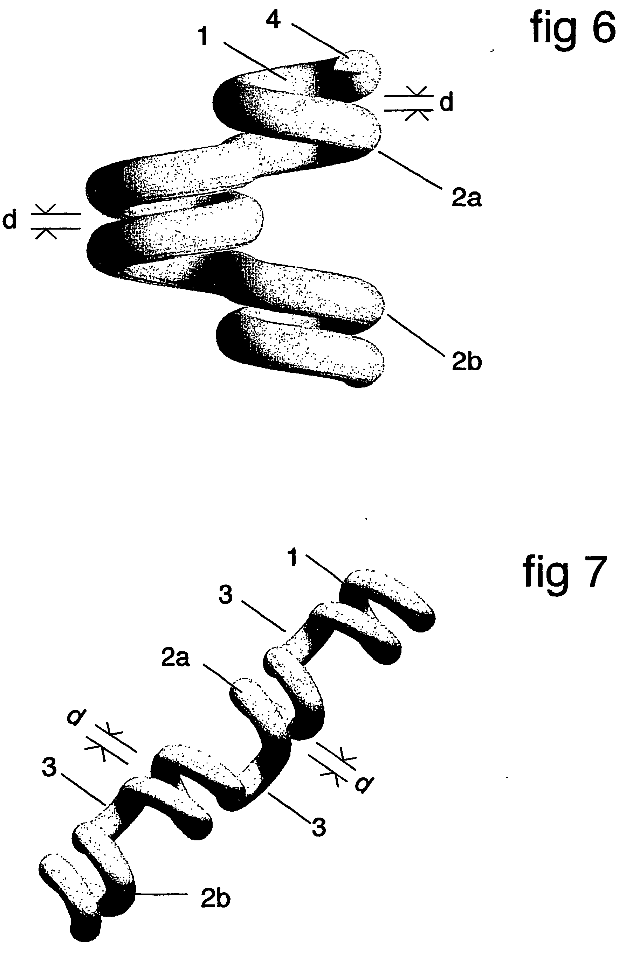

In fig. 6 there is shown a different embodiment of the fitting. Here the helical coil of the fitting has been provided with least one further helical coil in which the windings are turned the opposite way.

This allows for the fitting to accommodate more than one bundle of elongated objects, or to accommodate one bundle of eg. electrical cords 5 in one coil and a fixed or solid member 7 such as a table leg in the other.

As can further be seen in fig. 6 one of the coils is not contiguous but constituted of two partial coils 2a, 2b. There could evidently also be a larger number of partial coils than two. If used as described above this improves alignment between the fixed or solid member 7 such as a table leg and the bundle of elongated objects 5.

In fig. 7 is shown another embodiment of the invention using at least one further coil. Also in this case at least one of the coils may comprise two, as shown, partial coils 2a, 2b or more.

Since the coils are in this embodiment coaxial loops 3 exist between the coils or partial coils. These loops 3 facilitate the mounting of the fitting because the bundle of elongated objects may easily be inserted into the large gap between adjacent windings at the loop 3. The adjacent windings of cause being parts of different coils or partial coils having opposite winding directions.

As an astonishing side effect of the provision of the new and inventive fitting, it has turned out that, in particular when given the most preferred dimensions, ie. a helical 3½ winding rubber coil formed from a wound member 1 with an 11 mm diameter circular cross section, the fitting becomes so pleasant and convenient to manipulate that people find comfort therein. That is to say, when people get the fitting in their hand, they almost automatically start manipulating it purposelessly. This purposeless manipulation relieves personal stress and is thus very relaxing.

To recapitulate in other words, the present invention provides a reusable self-adjusting fitting, which is convenient and easy to use, for the gathering and tying of different sized bundles of elongated objects 5. In particular the fitting facilitates through its inherent shape, facilitates the manual handling operations of application, repositioning, removal and re-application as explained above and also allows for single-handed use. Thus the fitting can be easily and quickly attached to a bundle of elongated objects 5 without requiring extra parts or tools.

## Claims

1. A fitting for the use as a means for the gripping of one or more objects (5), said fitting comprising a substantially helical coil with at least two windings formed by a wound member (1) of a resilient material with shape memory, where said helical coil has a natural shape in which the substantially helical coil comprises a spacing (d) between adjacent windings, **characterized in that** the spacing (d) between adjacent windings comprises approximately 1/5 of the largest cross-sectional dimension of the wound member (1).

2. A fitting according to any one of the preceding claims, **characterized in that** the largest cross-sectional dimension of the wound member (1) is approximately between 6 mm and 16 mm, preferably 8 mm and 14 mm, and most preferably between 10 mm and 12 mm.

3. A fitting according to any one of the preceding claims, **characterized in that** the number of windings is 2 to 10.

4. A fitting according to any one of the preceding claims, **characterized in that** the number of windings is not an integer.

5. A fitting according to any one of the preceding claims, **characterized in that** the number of windings is approximately 3_.

6. A fitting according to any one of the preceding claims. **characterized in that** the wound member (1) comprises extremities (4) with reduced cross-sectional area.

7. A fitting according to any one of the preceding claims, **characterized in that** the cross section of elongated member (1) is substantially circular.

8. A fitting according to any one of the preceding claims, **characterized in that** at least one of the extremities (4) is hemispherical.

9. A fitting according to any one of claims 1 to 6, **characterized in that** the cross-section of the wound member (1) is substantially square or rectangular with rounded edges.

10. A fitting according to any one of claims 1 to 6, **characterized in that** the cross-section of the wound member (1) is substantially oval or elliptic.

11. A fitting according to any one of the preceding claims, **characterized in that** the wound member (1) is provided with a gripping surface (6) in the vicinity of at least one extremity (4), said gripping surface (6) being adapted for facilitating digital gripping during manipulation.

12. A fitting according to any of the preceding claims, **characterized in that** the fitting comprises at least one further helical coil in which the windings are turned the opposite way.

13. A fitting according to any of the preceding claims, wherein the outer surface (6) is flattened perpendicular or parallel to the bundle, to improve the grip of the fitting and to allow a more clearly visible surface for the application of text, or other printing, for the use of advertising etc.

14. A fitting according to any of the preceding claims, **characterized in that** the material is natural or synthetic rubber, a silicone based product or plastic.

15. The use of a fitting according to any one of the preceding claims as a means of protection by encircling an object (7) which is exposed to knocks or scratching.

## Patentansprüche

1. Eine Befestigung zur Nutzung als Mittel zum Ergreifen und Festhalten eines oder mehrerer Objekte (5), wobei genannte Befestigung aus einer im Wesentlichen schraubenförmigen Spirale besteht, mit mindestens zwei Wicklungen, ausgebildet durch ein gewickeltes Bauteil (1) hergestellt aus einem elastischen Werkstoff mit Formgedächtnis, wobei besagte schraubenförmige Spirale eine natürliche Form hat, in der die im Wesentlichen schraubenförmige Spirale einen Zwischenraum (d) zwischen angrenzenden Wicklungen enthält, **GEKENNZEICHNET dadurch, dass** der Abstand (d) zwischen angrenzenden Windungen ungefähr 1/5 der größten Querschnitts-Dimension des gewickelten Bauteiles (1) ausmacht.

2. Eine Befestigung gemäß irgendeines der vorangehenden Patentansprüche, **GEKENNZEICHNET dadurch, dass** die größte Querschnitts-Dimension des gewickelten Bauteils (1) etwa zwischen 6 mm und 16 mm, vorzugsweise 8 mm und 14 mm, und am allerbesten zwischen 10 mm und 12 mm beträgt.

3. Eine Befestigung gemäß irgendeines der vorangehenden Patentansprüche, **GEKENNZEICHNET dadurch, dass** die Anzahl der Wicklungen zwischen zwei und 10 beträgt.

4. Eine Befestigung gemäß irgendeines der vorangehenden Patentansprüche, **GEKENNZEICHNET dadurch, dass** die Anzahl der Wicklungen keine Ganzzahl ist.

5. Eine Befestigung gemäß irgendeines der vorangehenden Patentansprüche, **GEKENNZEICHNET dadurch, dass** die Anzahl der Wicklungen etwa 3_ beträgt.

6. Eine Befestigung gemäß irgendeines der vorangehenden Patentansprüche, **GEKENNZEICHNET dadurch, dass** das das gewickelte Bauteil (1) Extremitäten (4) mit reduzierter Querschnittsfläche aufweist.

7. Eine Befestigung gemäß irgendeines der vorangehenden Patentansprüche, **GEKENNZEICHNET dadurch, dass** das Querprofil des gestreckten Bauteils (1) im Wesentlichen kreisförmig ist.

8. Eine Befestigung gemäß irgendeines der vorangehenden Patentansprüche, **GEKENNZEICHNET dadurch, dass** mindestens eine der Extremitäten (4) halbkugelförmig ist.

9. Eine Befestigung gemäß irgendeines der Patentansprüche 1 bis 6, **GEKENNZEICHNET dadurch, dass** das Querprofil des gewickelten Bauteils (1) im Wesentlichen quadratisch oder rechteckig ist, mit abgerundeten Ecken.

10. Eine Befestigung gemäß irgendeines der Patentansprüche 1 bis 6, **GEKENNZEICHNET dadurch, dass** das Querprofil des gewickelten Bauteils (1) im Wesentlichen oval oder elliptisch ist.

11. Eine Befestigung gemäß irgendeines der vorangehenden Patentansprüche, **GEKENNZEICHNET dadurch, dass** das gewickelte Bauteil (1) in der Nähe zumindest einer der Extremitäten (4) mit einer greifenden Oberfläche (6) ausgestattet ist, wobei besagte greifende Oberfläche (6) dafür geeignet ist, während der Handhabung das Ergreifen des Bauteils mit den Fingern zu erleichtern.

12. Eine Befestigung gemäß irgendeines der vorangehenden Patentansprüche, **GEKENNZEICHNET dadurch, dass** die Befestigung mindestens eine zusätzliche schraubenförmige Spiralwindung enthält, in der die Wicklungen in die entgegengesetzte Richtung verlaufen.

13. Eine Befestigung gemäß irgendeines der vorangehenden Patentansprüche, wobei die äußere Oberfläche (6) lotrecht oder parallel zum Bündel abgeflacht ist, um den Griff der Befestigung zu verbessern und um eine klarer sichtbare Oberfläche für die Anbringung von Text, oder anderen Drucksachen, zu Werbezwecken, etc., zu ermöglichen.

14. Eine Befestigung gemäß irgendeines der vorangehenden Patentansprüche, **GEKENNZEICHNET dadurch, dass** der Werkstoff natürliches oder synthetisches Gummi, ein auf Silikon basierendes Produkt oder Plastik ist.

15. Eine Befestigung gemäß irgendeines der vorangehenden Patentsansprüche, die, durch die Einkreisung eines Objektes (7), das Stößen oder kratzen ausgesetzt ist, ein Mittel zu dessen Schutz darstellt.

## Revendications

1. Une attache à différents usages dont on peut se servir comme un moyen pour rassembler, et ou tenir, un ou plusieurs éléments (5), l'attache en question comprend en majeure partie un serpentin hélicoidal ayant au moins deux enroulements (1) d'une matière résiliante avec une mémoire de forme, où le dit serpentin hélicoidal comprend un écartement (d) entre les enroulements adjacents, **caractérisé par le fait que** l'écartement (d) entre les enroulements adjacents comprend approximativement 1/5 de la plus grande dimension de la coupe transversale de l'élément enroulé.

2. Une attache qui selon n'importe lequel des revendications précédentes, est **caractérisé par le fait que** la plus grande dimension de le coupe tansversale du membre enrouleur (1) est approximativement entre 6mm et 16mm, de préférence 8mm et 14mm, et de toute préférence entre 10mm et 12mm.

3. Une attache selon quelconque des revendications précédentes, **caractérisé par le fait que** le nombre d'enroulements est de 2 à 10.

4. Une attache selon quelconque des revendications précédentes, **caractérisé par le fait que** le nombre des enroulements n'est pas un nombre entier.

5. Une attache selon quelconque des revendications précédentes, **caractérisé par le fait que** le nombre des enroulements est approximativement 3_.

6. Une attache selon quelconque des revendications précédentes, **caractérisé par le fait que** le membre enrouleur (1) comprend des exrémités (4) dont la surface de la coupe transversale est diminuée.

7. Une attache selon quelconque des revendications précédentes, **caractérisé par le fait que** la coupe transverale du membre enroulé (1) est en grande partie circulaire.

8. Une attache selon quelconque des revendications précédentes, **caractérisé par le fait que** au moins une des extrémités (4) est hémisphérique.

9. Une attache selon quelconque des revendications de 1 à 6, **caractérisé par le fait que** la coupe transversale du membre enrouleur est carré ou bien rectangulaire, avec des bouts arrondis.

10. Une attache selon quelconque des revendications de 1 à 6, **caractérisé par le fait que** la coupe transversale du membre enrouleur (1) est en grande partie ovale, ou éliptique.

11. Une attache selon quelconque des revendications précédentes, **caractérisé par le fait que** le membre enrouleur (1) est pourvu d'une surface de prise (6) à proximité de au moins une des extrémités (4), la dite surface de prise étant adaptée pour faciliter la prise des doigts pendant la manutention.

12. Une attache selon quelconque des revendications précédentes, **caractérisé par le fait que** l'attache comprend au moins une spirale hélicoidal supplémentaire dont les enroulements sont tournés dans le sens opposé.

13. Une attache selon quelconque des revendications précédentes, dont la surface externe (6) est aplati perpendiculairement, ou parallel à l'empaquettement, de tel sorte à amélliorer la prise de l'attache et de pouvoir permettre une surface plus clairement visible pour l'application de texte, ou autre impression, pour des raisons publicitares ou autre.

14. Une attache selon quelconque des revendications précédentes, **caractérisé par le fait que** la matière est à base de caoutchouc naturel ou synthétique, ou une matière à base de silicone ou plastique.

15. Une attache selon quelconque des revendications précédentes comme un moyen de protection, en encerclant un objet (7) qui est sensible à être sujet à des coups ou griffes.
